# EUROPÄISCHE PATENTSCHRIFT

(11) **EP 2 826 678 B1**
(45) Veröffentlichungstag und Bekanntmachung des Hinweises auf die Patenterteilung: **20.01.2016**
(21) Anmeldenummer: 13176726.1
(22) Anmeldetag: 16.07.2013
(51) Int. Cl.: B60R 22/46

(54) **Aktivierungseinheit für ein Sicherungssystem eines Kraftfahrzeugs**
Activation unit for a securing system of a motor vehicle
Unité d'activation pour un système de sécurisation d'un véhicule automobile

(43) Veröffentlichungstag der Anmeldung: 21.01.2015
(73) Patentinhaber: Metalsa Automotive GmbH, 51702 Bergneustadt (DE)
(72) Erfinder: Kern, Alexander, 51597 Morsbach (DE); Hellweg, Dr. Hans-Bernd, 53819 Neunkirchen-Seelscheid (DE)
(74) Vertreter: Rebbereh, Cornelia

(56) Entgegenhaltungen:
- EP-A1- 0 648 652
- DE-A1- 4 419 930
- US-A- 5 681 004

## Beschreibung

Die Erfindung betrifft eine Aktivierungseinheit für ein Sicherungssystem eines Kraftfahrzeugs, mit
- einem pyrotechnischen Gasgenerator sowie
- einer mit dem pyrotechnischen Gasgenerator in Wirkverbindung befindlichen Antriebseinheit zur Umwandlung des bei einer Aktivierung des Gasgenerators austretenden Gasstroms in eine Rotationsbewegung eines mit dem Sicherheitssystem verbindbaren Rotors, vgl. DE 44 19 930 A1.

Das ständig steigende Sicherheitsbedürfnis der Fahrzeugnutzer hat dazu geführt, dass moderne Kraftfahrzeuge mittlerweile eine Vielzahl von Sicherungssystemen aufweisen, welche im Falle eines Unfalls dazu dienen, Verletzungen der Fahrzeuginsassen zu verhindern, bzw. deren Schweregrad zu minimieren.

Für die Wirkungsweise eines Großteils der sensorgesteuerten Sicherungssysteme ist es erforderlich, dass diese nach ihrer Aktivierung in einem Zeitraum von wenigen Zehntel Sekunden ihre vollständige Schutzwirkung entfalten, so dass unmittelbar der gewünschte Insassenschutz bereitsteht. Bekannte Sicherungssysteme mit kurzen Reaktionszeiten sind bspw. Airbags, Gurtstraffer oder aufstellbare Überrollbügel bei Cabriofahrzeugen. Bei derartigen Systemen bewirkt die Aktivierung zu Beginn eines Unfalls eine unmittelbare Einstellung der Sicherungslage des jeweiligen Sicherungssystems.

Um eine sofortige Aktivierung der Sicherungssysteme mit den geforderten kurzen Reaktionszeiten zu gewährleisten, werden vermehrt pyrotechnische Gasgeneratoren verwendet, welche nach ihrer Aktivierung unmittelbar einen Gasstrom erzeugen, dessen Expansionsdruck neben der Befüllung eines Airbags auch zur Erzeugung einer Verlagerungsbewegung eines Sicherungssystems genutzt werden kann. Zur Umwandlung des bei der Auslösung des Gasgenerators austretenden Gasstroms in eine von einem Sicherungssystem nutzbare Rotationsbewegung ist es bspw. bereits bekannt, den Gasstrom derart umzuleiten, dass ein mit einem Sicherungssystem verbindbarer Rotor der Aktivierungseinheit in eine Rotationsbewegung versetzt wird.

Bekannte Aktivierungseinheiten weisen jedoch den Nachteil auf, dass die erzeugbare Rotationsbewegung nur begrenzt ist, bzw. großvolumige pyrotechnische Gasgeneratoren verwendet werden müssen, um die zur Verstellung des Sicherungssystems erforderliche Rotationsbewegung zu erreichen.

Der Erfindung liegt die Aufgabe zugrunde, eine Aktivierungseinheit bereitzustellen, welche besonders kompakt aufgebaut ist und dabei eine hohe Rotationsbewegung aufweist. Die Erfindung löst die Aufgabe durch eine Aktivierungseinheit mit den Merkmalen des Anspruchs 1. Vorteilhafte Weiterbildungen der Erfindung sind in den abhängigen Ansprüchen angegeben.

Die erfindungsgemäße Aktivierungseinheit , welche zur Umwandlung des bei einer Aktivierung des Gasgenerators austretenden Gasstroms in eine Rotationsbewegung eines Rotors dient, weist mindestens zwei in Strömungsrichtung des austretenden Gases angeordnete Antriebskammern auf. Die Strömungsrichtung des austretenden Gases ist dabei durch die Aktivierungseinheit konstruktiv vorgegeben, bspw. durch in der Aktivierungseinheit ausgebildete Kanäle, entlang derer sich der austretende Gasstrom oder ein durch den Gasstrom verdrängtes Fluid nach der Aktivierung des Gasgenerators bewegen kann. Die Antriebskammern sind in Strömungsrichtung des ausströmenden Gases angeordnet und ermöglichten über eine Eintritts- sowie eine Austrittsöffnung den Durchtritt des aus dem Gasgenerator austretenden Gases oder eines Fluids, welches aufgrund des Gasdrucks durch die Antriebskammern hindurch befördert wird. Erfindungsgemäß weisen die Antriebskammern jeweils einen Antriebskörper auf, welcher mit dem mit einem Sicherungssystem verbindbaren Rotor der Aktivierungseinheit in Wirkverbindung bringbar ist. Die Wirkverbindung des Antriebskörpers mit dem Rotor wird durch eine Verstellung des Antriebskörpers hervorgerufen. Das durch die Antriebskammer hindurch strömende Fluid oder Gas bewirkt dann, dass bei einer Aktivierung des pyrotechnischen Gasgenerators der Gasstrom den Rotor antreibt, vgl. DE 4419930A1.

Die Anordnung der mindestens zwei Antriebskammern zueinander kann grundsätzlich in beliebiger Weise erfolgen. Die Verwendung der Antriebskammern in einer bspw. parallelen Anordnung zum Rotor, wobei der Gas- oder Flüssigkeitsstrom aufgeteilt und gleichzeitig durch die Antriebskammern geleitet wird, erlaubt es, ein besonders hohes Antriebsmoment zu erreichen. Die Kopplung der Antriebskörper mit dem Rotor erfolgt dabei derart, dass die beiden Antriebskörper sich gegenseitig unterstützen und es nicht zu einer blockierenden Bewegung kommt. Die Verwendung eines mit dem Rotor in Wirkverbindung bringbaren Antriebskörpers erlaubt es zudem, in der Antriebseinheit eine Über- oder Untersetzung der Verlagerungsbewegung des Antriebskörpers auf den Rotor vorzunehmen, so dass über die Ausgestaltung der Verbindung in einfacher Weise die für das jeweilige Sicherungssystem erforderliche Umdrehungszahl sowie das Drehmoment des Rotors eingestellt werden kann. Die erfindungsgemäße Aktivierungseinheit zeichnet sich insbesondere dadurch aus, dass sie eine für das jeweilige Sicherungssystem erforderliche Drehbewegung des Rotors in einfacher Weise bereitstellt.

Die Anordnung der mindestens zwei Antriebskammern kann, wie bereits zuvor dargelegt, grundsätzlich in beliebiger Weise erfolgen. Neben einer parallelen Anordnung der Antriebskammern ist nach einer vorteilhaften Weiterbildung der Erfindung jedoch vorgesehen, dass die Antriebskammern in Strömungsrichtung des austretenden Gases betrachtet hintereinander liegend angeordnet sind. Gemäß dieser Ausgestaltung der Erfindung befinden sich die Antriebskammern in einer Anordnung, bei der das aus einer Austrittsöffnung einer ersten Antriebskammer austretende Fluid oder Gas erst anschließend in die Eintrittsöffnung einer der ersten Antriebskammer nachgelagerten zweiten Antriebskammer gelangt. Die Strömungsrichtung ist dabei wie bereits zuvor erläutert durch eine konstruktive Ausgestaltung der Aktivierungseinheit vorgegeben. Das bei einer Aktivierung des pyrotechnischen Gasgenerators erzeugte Gas wird nach dem Austritt aus dem Gasgenerator gezielt durch die Aktivierungseinheit geleitet, aus der es letztlich aus einer vorteilhafterweise vorgesehenen, vorzugsweise als Druckentlastungsöffnung ausgebildeten, Austrittsöffnung austritt. Für den Fall der Verwendung eines Fluids, wird dieses aufgrund des Gasdrucks in gleicher Weise anstelle des Gases durch die vorgesehenen Kanäle geleitet, bis es ebenfalls aus der hierfür vorteilhafterweise vorgesehenen Austrittsöffnung austritt.

Bei der Anordnung der Antriebskammern in Strömungsrichtung hintereinander liegend wird der austretende Gasstrom bzw. das durch den Gasstrom beförderte Fluid mehrfach dazu genutzt, um den mit den Antriebskörpern verbundenen Rotor in eine Rotationsbewegung zu versetzen. Durch diese Ausgestaltung der Erfindung ist es somit möglich, die durch eine Aktivierung des pyrotechnischen Gasgenerators hervorrufbare Umdrehungszahl des Rotors, über die Anzahl der hintereinander liegend anordbaren Arbeitskammern an die geforderte Umdrehungszahl anzupassen. Zusätzliche Antriebskammern sind derart angeordnet, dass das aus der vorhergehenden Antriebskammer austretende Gas oder Fluid aus der jeweiligen Austrittsöffnung in die nachgeordnete Eintrittsöffnung der nächsten Antriebskammer gelangt, der wiederum eine den Rotor antreibende Verlagerung des Antriebskörpers folgt.

Die Ausgestaltung der Antriebskörper ist dabei grundsätzlich frei wählbar. Nach einer vorteilhaften Ausgestaltung der Erfindung ist jedoch vorgesehen, dass der vorzugsweise als Schwenkflügel ausgebildete Antriebskörper an der Kammerwand abdichtend anliegend zwischen einer Ausgangslage im Bereich der Eintrittsöffnung und einer Endlage im Bereich der Austrittsöffnung verschwenkbar gelagert ist, wobei der Antriebskörper in der Endlage in einer den Zugang zur Austrittsöffnung freigebenden Position angeordnet ist.

Gemäß dieser Ausgestaltung der Erfindung erfolgt durch den über die Eintrittsöffnung in die Antriebskammer eintretenden Gas- oder Fluidstrom eine Verdrehung des Antriebskörpers, bei der dieser abdichtend an der Kammerwand anliegt, so dass die Drehbewegung in einfacher Weise in eine Rotationsbewegung übertragbar ist. Die abdichtende Anlage des Antriebskörpers an der Kammerwand gewährleistet dabei in besonders zuverlässiger Weise, dass es nicht zu einem Überströmen des Gas- oder Fluidstroms kommt, so dass der Antriebskörper einseitig druckbelastet durch den Gas- oder Fluidstrom bis in die Endlage verstellt wird. Der Eintritt des Gasstroms bzw. Fluids in die der ersten Antriebskammer nachfolgende Antriebskammer erfolgt erst in der Endlage des Antriebskörpers, in der dieser die mit der Eintrittsöffnung der nachfolgenden Antriebskammer verbundene Austrittsöffnung der ersten Antriebskammer frei gibt. Die gemäß dieser Ausgestaltung der Erfindung abdichtende Anordnung gewährleistet einen besonders hohen Wirkungsgrad und ermöglicht über die grundsätzlich beliebige Anzahl hintereinander angeordneter Arbeitskammern die Erzeugung einer Vielzahl von Umdrehungen des Rotors der Aktivierungseinheit.

Wesentlich für die Funktion der erfindungsgemäßen Aktivierungseinheit ist, dass die durch die Antriebskörper erzeugte, auf den Rotor übertragbare Verlagerungsbewegung im Wesentlichen vollständig auf den Rotor übertragen wird, um so die Umdrehungszahl des Rotors zu maximieren.

Nach der Erfindung ist dabei vorgesehen, dass der Antriebskörper in der Ausgangs- und Endlage von dem Rotor entkoppelt ist. Damit befindet sich der Antriebskörper sowohl in der Ausgangslage also auch in der Endlage außer Eingriff mit dem Rotor. Eine Übertragung der Verlagerungsbewegung des Antriebskörpers, bspw. eine Verschwenkbewegung eines Schwenkflügels auf den Rotor, erfolgt nur im Bereich zwischen der Ausgangslage und der Endlage. Nur in diesem Bereich ist der Antriebskörper mit dem Rotor gekoppelt. Dadurch wird erreicht, dass der Rotor in der Ausgangslage und Endlage der Antriebskörper gegenüber diesen einen Freilauf besitzt.

Eine Verschwenkung des Antriebskörpers und eine damit einhergehende Übertragung der Verschwenkbewegung auf den Rotor wird somit nicht durch die dem zu verstellenden Antriebskörper nachfolgenden oder vorhergehenden Antriebskörper behindert, nachdem die Antriebskörper grundsätzlich entweder in der Ausgangslage oder - nach dem Zusammenwirken mit einem die entsprechende Antriebskammer durchströmenden Gas oder Fluid - in der Endlage angeordnet sind. Durch diese Ausgestaltung kann somit eine kaskadenartige Abfolge des Antriebs des Rotors erfolgen, wobei immer nur ein sich verlagernder Antriebskörper in Eingriff mit dem Rotor befindlich ist, wohingegen die übrigen, in der Ausgangslage oder Endlage befindlichen Antriebskörper, einen Antrieb des Rotors aufgrund ihrer von diesem bestehenden Entkopplung nicht behindern.

Die Ausgestaltung der Umwandlung der Bewegung des Antriebskörpers in eine Drehbewegung des Rotors kann grundsätzlich in beliebiger Weise erfolgen. Nach einer besonders vorteilhaften Ausgestaltung der Erfindung ist jedoch vorgesehen, dass der vorzugsweise verschwenkbare Antriebskörper mit einem mit dem Rotor in Eingriff bringbaren Zahnrad verbunden ist, das derart ausgebildet und/oder angeordnet ist, dass der Rotor in der Ausgangslage und Endlage des Antriebskörpers mit dem Rotor außer Eingriff befindlich ist. Durch die Anpassung der Größe (Höhe oder Flügelradius) des Rotors kann das zu übertragende Moment an den externen Lastfall / Anwendung oder auch der Energiefreisetzung des Mikrogasgenerators angepasst werden. Auch unterschiedliche Übersetzungsverhältnisse der nachgeschalteten Zahnräder können diese Aufgabe übernehmen.

Gemäß dieser Ausgestaltung der Erfindung wird die vorteilhafterweise vorgesehene Verschwenkbewegung auf ein mit dem Antriebskörper verbundenes Zahnrad übertragen, welches seinerseits über eine entsprechende Ausgestaltung des Rotors die Verschwenkbewegung des Antriebskörpers auf den Rotor überträgt. In ihrer einfachsten Ausgestaltung ist das Zahnrad auf der durch eine Welle gebildeten Schwenkachse des Antriebskörpers angeordnet. Zur Erzielung der gemäß einer vorteilhaften Weiterbildung vorgesehenen Entkopplung des Antriebskörpers von dem Rotor in der Eingangslage und Ausgangslage ist dabei das mit dem Antriebskörper verbundene Zahnrad derart ausgebildet und/oder angeordnet, dass dieses nur im Bereich zwischen der Ausgangslage und der Endlage mit dem Rotor in Eingriff befindlich ist. Über eine entsprechende Ausgestaltung und/oder Anordnung kann somit besonders einfach die bevorzugte Entkopplung in der Ausgangs- und Endlage erreicht werden.

Die Ausgestaltung des Zahnrads zur Gewährleistung des vorstehend beschriebenen Freilaufs des Rotors gegenüber dem Zahnrad in der Ausgangs- und Endlage des zugeordneten Antriebskörpers kann grundsätzlich in beliebiger Weise erfolgen. Nach einer vorteilhaften Weiterbildung der Erfindung ist jedoch vorgesehen, dass das Zahnrad einen verzahnungsfreien Bereich aufweist, der derart ausgebildet ist, dass er in der Ausgangslage und Endlage den Antriebskörper von einer auf dem Rotor angeordneten Verzahnung entkoppelt. Gemäß dieser Ausgestaltung der Erfindung weist das Zahnrad einen verzahnungsfreien Bereich auf, der sowohl in der Ausgangs- als auch in der Endlage einer auf dem Rotor angeordneten Verzahnung zugewandt ist, so dass das Zahnrad sich folglich nicht in Eingriff mit der Verzahnung des Rotors befindet. Erst eine Verschwenkung des Antriebskörpers bewirkt eine Verdrehung des Zahnrads in der Art, dass der an den verzahnungsfreien Bereich angrenzende verzahnte Bereich des Zahnrads mit der Verzahnung auf dem Rotor in Eingriff gelangt und so eine Rotationsbewegung des Rotors hervorruft. Diese Ausgestaltung der Entkopplung lässt sich besonders einfach und kostengünstig herstellen. Auch ist die Verwendung mehrerer verzahnungsfreier Bereiche denkbar, umso auch bei unterschiedlichen Durchmessern der Zahnräder zu gewährleisten, dass sich das zugeordnete Zahnrad in der Ausgangslage und Endlage des Antriebskörpers außer Eingriff mit der Verzahnung des Rotors befindet.

Nach einer Weiterbildung der Erfindung ist vorgesehen, dass der Antriebskörper einer einer ersten Antriebskammer nachfolgenden Antriebskammer bis zum Erreichen der Endlage des Antriebskörpers der vorhergehenden Antriebskammer in der Ausgangslage verdrehgesichert ist. Gemäß dieser Ausgestaltung der Erfindung ist für die Antriebseinheit ferner eine Verdrehsicherung der Antriebskörper und somit auch der mit dem Antriebskörper verbundenen Übertragungselemente, bspw. Zahnräder, vorgesehen, so dass in besonders zuverlässiger Weise gewährleistet werden kann, dass sich der Rotor in der Ausgangs- und Endlage der Antriebskörper in einer Freilaufposition befindet.

Diese Ausgestaltung der Erfindung ermöglicht es bspw., den Rotor im Normalbetrieb für eine ggf. vorgesehene reguläre Verstellung einer dem Sicherungssysteni zugeordneten Baueinheit des Kraftfahrzeugs zu verwenden, ohne dass diese Verstellung durch die Aktivierungseinheit beeinflusst wird.

Durch die Verwendung der vorteilhafterweise vorgesehenen Verdrehsicherung wird in besonders zuverlässiger Weise gewährleistet, dass die Antriebskörper im nicht aktivierten Zustand der Aktivierungseinheit in ihrer Ausgangslage verbleiben, wodurch die Funktionssicherheit der Aktivierungseinheit gesteigert sowie auch für den Fall einer Verwendung des Rotors im regulären Betrieb die Betriebssicherheit aufgrund des Freilaufs besonders zuverlässig gewährleistet wird. Gemäß der Weiterbildung der Erfindung erfolgt eine Verlagerung des Antriebskörpers einer einer ersten Antriebskammer nachfolgenden Antriebskammer erst nach Auflösung der bestehenden Verdrehsicherung, wobei diese durch Erreichen der Endlage des Antriebskörpers der vorhergehenden Antriebskammer aufgelöst wird.

Die Ausgestaltung der Verdrehsicherung ist grundsätzlich frei wählbar. Nach einer besonders vorteilhaften Ausgestaltung der Erfindung ist jedoch vorgesehen, dass die Verdrehsicherung ein zwischen einer Sperrstellung und einer Freigabestellung verlagerbares Sperrelement aufweist, das derart an einer Stirnfläche des mit dem ersten Antriebskörper verbundenen Zahnrads anliegt, dass sich das Sperrelement bei einer Anlage im Verzahnungsbereich des Zahnrads in der den Antriebskörper der nachfolgenden Antriebskammer blockierenden und bei einer Anlage im verzahungsfreien Bereich des Zahnrads in der den nachfolgenden Antriebskörper freigebenden Position befindet.

Gemäß dieser Ausgestaltung dient das gemäß einer vorteilhaften Weiterbildung der Erfindung mit einem verzahnungsfreien Bereich versehene Zahnrad neben der Bereitstellung eines Freilaufs ferner dazu, das Sperrelement zwischen seiner Sperrstellung und seiner Freigabestellung zu bewegen. Bei einer Anlage des Sperrelements im Verzahnungsbereich des Zahnrads wirkt das Sperrelement mit einer Sperrfläche mittelbar oder unmittelbar mit dem Antriebskörper der nachfolgenden Antriebskammer zusammen, so dass eine Verlagerung des Antriebskörpers der nachfolgenden Antriebskammer sowie eine Bewegung eines mit diesem verbundenen Zahnrads in wirkungsvoller Weise blockiert ist. Durch eine Verlagerung des Zahnrads der vorhergehenden Antriebskammer gelangt das Sperrelement in einen verzahnungsfreien Bereich des Zahnrads, in der die dem nachfolgenden Antriebskörper oder dem nachfolgenden Zahnrad zugeordnete Sperrfläche des Sperrelements mit diesem Antriebskörper oder Zahnrad außer Eingriff gelangt, so dass der Antriebskörper dann zwischen der Ausgangslage und der Endlage verstellbar ist.

Diese Ausgestaltung der Erfindung zeichnet sich durch die besonders einfache Herstellung der Verdrehsicherung aus, wobei durch die Verwendung eines einen verzahnungsfreien Bereich aufweisenden Zahnrads auf zusätzliche Elemente zur Steuerung des Sperrelements verzichtet werden kann. Besonders vorteilhafterweise ist dabei das Sperrelement in Richtung auf die Freigabestellung vorgespannt, so dass besonders zuverlässig im Falle einer Aktivierung der Aktivierungseinheit bei Erreichen der Endlage die gewünschte Aufhebung der jeweiligen Verdrehsicherung erreicht wird.

Die Anzahl sowie die Anordnung der Antriebskammern kann grundsätzlich in beliebiger Weise erfolgen. Nach einer besonders vorteilhaften Ausgestaltung der Erfindung ist jedoch vorgesehen, dass mindestens drei, bevorzugt vier Antriebskammern in Strömungsrichtung des austretenden Gases hintereinander liegend koaxial zum Rotor angeordnet sind. Durch diese Ausgestaltung der Erfindung kann eine besonders kleine Bauform erreicht werden, wobei die koaxiale Anordnung der Antriebskammern zueinander gleichzeitig auch senkrecht zur Längsachse des Rotors erfolgen kann. Neben einer kleinen Bauform der Aktivierungseinheit ist somit auch eine hohe Umdrehungszahl des Rotors herstellbar.

Erfindungsgemäß ist vorgesehen, dass entweder das aus dem pyrotechnischen Gasgenerator ausströmende Gas, ein zwischen dem pyrotechnischen Gasgenerator und der Eintrittsöffnung der ersten Antriebskammer angeordnete Gas, bspw. Luft, oder ein Fluid durch die Antriebskammern bewegt wird, um eine Verstellung der Antriebskörper zu gewährleisten. Besonders bevorzugt ist ein fluides Medium derart in Strömungsrichtung zwischen dem pyrotechnischen Gasgenerator und den Antriebskammern angeordnet, dass das fluide Medium durch den austretenden Gasstrom in die Antriebskammern befördert wird. Die Verwendung eines fluiden Mediums zeichnet sich dabei insbesondere dadurch aus, dass gegenüber gasförmigen Medien geringere Leckageverluste beim Durchströmen der Antriebskammern auftreten. Die Ausgestaltung einer abdichtenden Anordnung der Antriebskörper an der Antriebskammer kann mit geringerem Aufwand erfolgen, ohne dass es zu einem Überströmen um den Antriebskörper kommt. Dieser geringere Leckageeinfluss gegenüber reinen gasbetriebenen Antrieben erhöht die Funktionsweise und Betriebssicherheit der Aktivierungseinheit in ergänzender Weise.

Die Anordnung des fluiden Mediums im Bereich - in Strömungsrichtung betrachtet - zwischen dem pyrotechnischen Gasgenerator und der die Antriebskammern aufweisende Antriebseinheit kann grundsätzlich in beliebiger Weise erfolgen. Gemäß einer besonders vorteilhaften Weiterbildung der Erfindung ist jedoch vorgesehen, dass das fluide Medium, bevorzugt ein Gel, in einer koaxial zum Gasgenerator angeordneten Kammer angeordnet ist. Gemäß dieser Ausgestaltung der Erfindung ist das fluide Medium in einer bevorzugt ringförmigen Kammer, welche sich koaxial zum Gasgenerator erstreckt, angeordnet und dort im Falle einer Aktivierung des pyrotechnischen Gasgenerators mit dem durch das austretende Gas hervorgerufenen Gasdruck beaufschlagbar. Die koaxiale Anordnung erlaubt eine besonders kompakte Bauform der Aktivierungseinheit, so dass der Einsatzbereich der Aktivierungseinheit in ergänzender Weise gesteigert werden kann. Die Verwendung eines Gels zeichnet sich dabei dadurch aus, dass Leckargeverluste in ergänzender Weise reduziert werden und gleichzeitig eine hohe Funktionssicherheit gewährleistet wird.

Eine Übertragung des Gasdrucks auf das fluide Medium kann grundsätzlich in beliebiger Weise realisiert werden. Nach einer besonders vorteilhaften Ausgestaltung ist jedoch vorgesehen, dass das fluide Medium über einen Schwimmkolben gegenüber dem austretenden Gas abgedichtet ist. Hierdurch wird eine besonders hohe Funktionssicherheit gewährleistet, nachdem der Schwimmkolben einerseits ein Austreten des fluiden Mediums verhindert, andererseits im Falle einer Aktivierung eine Übertragung des Drucks auf das fluide Medium bewirkt. Der Schwimmkolben ist dabei vorzugsweise an die Form der das fluide Medium aufnehmenden Kammer angepasst. Im Falle der Verwendung einer ringförmigen, koaxial zum Gasgenerator angeordneten Kammer wird der Schwimmkolben durch einen ringförmigen Ring gebildet, der einerseits an dem fluiden Medium anliegt und andererseits durch Gasdruck beaufschlagbar ist. Bei der Aktivierung des Gasgenerators wird der Schwimmkolben in Strömungsrichtung betrachtet in Richtung auf die Antriebseinheit verlagert, wodurch das fluide Medium durch die Antriebskammer hindurch befördert wird.

Die Anordnung des fluiden Mediums in der hierfür vorgesehenen Kammer kann grundsätzlich in beliebiger Weise erfolgen. Nach einer besonders vorteilhaften Ausgestaltung der Erfindung ist jedoch vorgesehen, dass das fluide Medium in einer durch Druckbelastung aufreißenden, an die Form der Kammer angepassten flexiblen Hülle angeordnet ist. Diese Ausgestaltung der Erfindung ermöglicht eine einfache Montage der Aktivierungseinheit und Anordnung des vorteilhafterweise vorgesehenen fluiden Mediums in der hierfür vorgesehenen Kammer. Aufgrund der Verwendung einer unter Druckbelastung aufreißenden flexiblen Hülle wird dabei gewährleistet, dass bei einer Aktivierung des pyrotechnischen Gasgenerators das in der Hülle angeordnete fluide Medium durch die Antriebskammern befördert wird. Die flexible Hülle gewährleistet dabei darüber hinaus, dass im nicht aktivierten Zustand der Aktivierungseinheit keine Flüssigkeit in Kontakt mit den Bauteilen der Aktivierungseinheit gelangt, so dass auf Korrosionsschutzmaßnahmen bei der Verwendung des fluiden Mediums vollständig verzichtet werden kann. Auch kann auf aufwändige Abdichtungsmaßnahmen zur dauerhaften Anordnung des fluiden Mediums in der Kammer verzichtet werden.

Ein Ausführungsbeispiel der Erfindung wird nachstehend mit Bezug auf die Zeichnungen erläutert. In den Zeichnungen zeigen:
- Fig. 1: eine Schnittansicht einer Aktivierungseinheit;
- Fig. 2: eine Schnittansicht der Aktivierungseinheit von Fig. 1 in einer nicht aktivierten Position;
- Fig. 3: eine Schnittansicht der Aktivierungseinheit von Fig. 1 in einer aktivierten Position;
- Fig. 4: eine Schnittansicht der Aktivierungseinheit von Fig. 1 entlang des Schnitts A - A von Fig. 2 in einer nicht aktivierten Lage der Aktivie rungseinheit;
- Fig. 5: eine Schnittansicht entlang des Schnitts A - A von Fig. 2 in einer aktivierten Lage der Aktivierungseinheit und
- Fig. 6: eine Schnittansicht entlang des Schnitts B - B von Fig. 3 in einer nicht aktivierten Lage der Aktivierungseinheit.

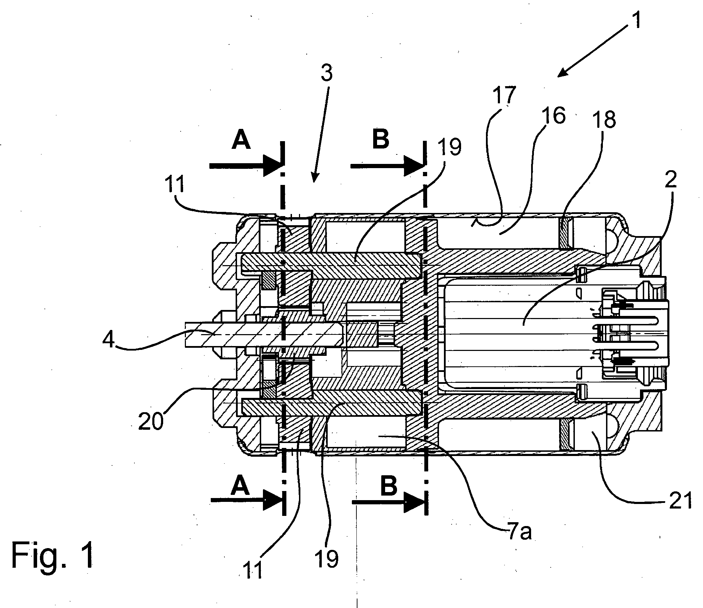

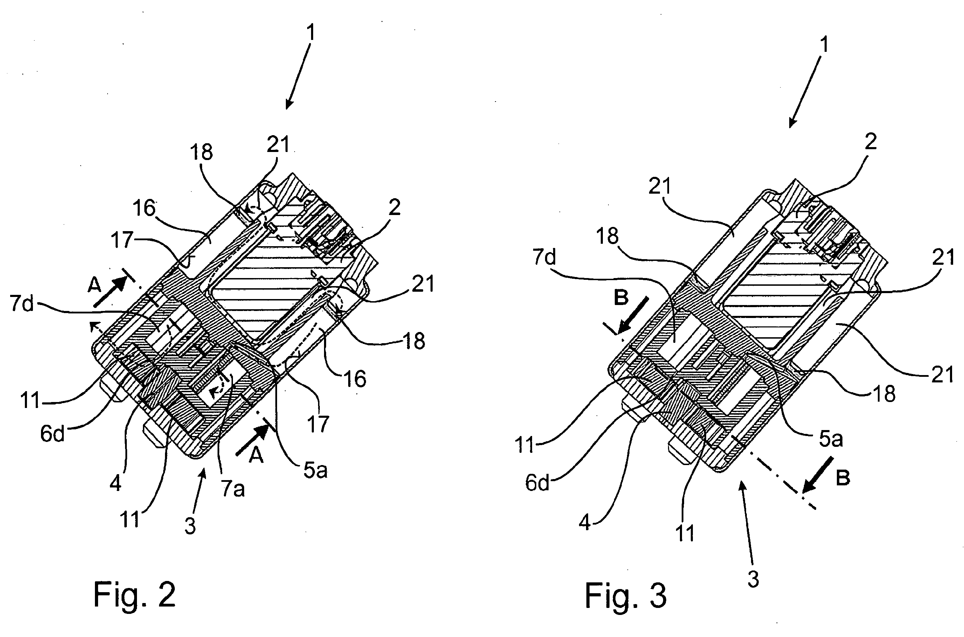

Eine in den Figuren 1 - 3 in einem Längsschnitt dargestellte Aktivierungseinheit 1 weist neben einem pyrotechnischen Gasgenerator 2 eine mit dem Gasgenerator 2 in Strömungsverbindung stehende Antriebseinheit 3 auf. Eine Aktivierung des pyrotechnischen Gasgenerators 2, der in den Fig. 1 und 2 in einer nicht aktivierten Stellung der Aktivierungseinheit 1 dargestellt ist, bewirkt ein schlagartiges Ausströmen eines Gases, welches dann in den den Gasgenerator 2 umgebenden Gasraum 21 gelangt, wobei sich das expandierende Gas entlang der in Fig. 2 dargestellten gestrichelten Pfeillinie bewegt.

Das in den Gasraum 21 expandierte Gas übt Druck auf einen ringförmigen, koaxial zum Gasgenerator 2 angeordneten Schwimmkolben 18 aus, welcher den Gasraum 21 von einer ebenfalls koaxial angeordneten, mit einem fluiden Medium 16 gefüllten Flüssigkeitskammer 17 abgrenzt. Eine Aktivierung des pyrotechnischen Gasgenerators 2 bewirkt somit aufgrund des Gasdrucks eine Verlagerung des Schwimmkolbens 18 in Richtung der Antriebseinheit 3 bis in die Fig. 3 dargestellte Position nach der Aktivierung, in der der Schwimmkolben 18 vollständig von seiner Ausgangsposition bis in seine Endlage in die Flüssigkeitskammer 16 bewegt wurde.

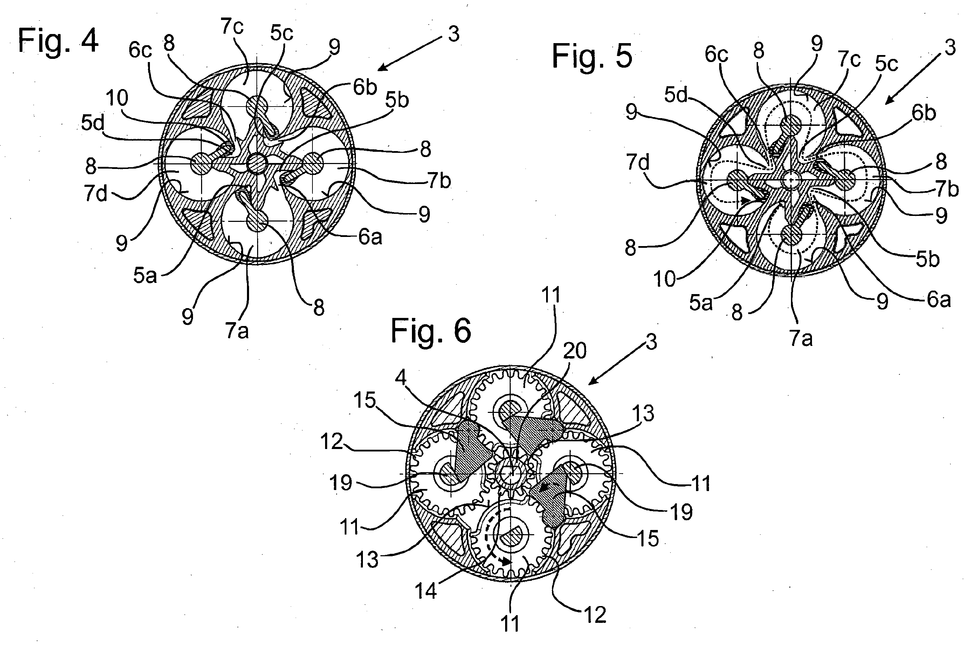

Die Antriebseinheit 3, welche mit der Flüssigkeitskammer 17 strömungstechnisch verbunden ist, so dass das fluide Medium 16 aus der Flüssigkeitskammer 17 in die Antriebseinheit 3 gelangen kann, weist vier Arbeitskammern 7a, 7b, 7c, 7d auf, welche in Strömungsrichtung betrachtet hintereinander liegend angeordnet sind. Ein aus der Flüssigkeitskammer 17 in Folge einer Druckbeaufschlagung des Schwimmkolbens 18 in die Antriebseinheit 3 befördertes fluides Medium 16 gelangt zunächst über eine mit der Flüssigkeitskammer 16 verbundene Eintrittsöffnung 5a in die erste Arbeitskammer 7a, wodurch ein über die Kammerwand 9 abgedichteter Antriebskörper in Form eines Schwenkflügels 8 aus seiner in Fig. 4 dargestellten Ausgangslage in seine in Fig. 5 dargestellte Endlage bewegt wird, welche sich nach einer Aktivierung der Aktivierungseinheit 1 einstellt.

Das über die Eintrittsöffnung 5a der Antriebseinheit 3 in die erste Antriebskammer 7a einströmende Fluid 16 bewirkt ein Verschwenken des Flügelkörpers 8 bis in die in Fig. 5 dargestellte Endlage, wobei im Bereich der Endlage eine zuvor durch den Flügelkörper 8 verschlossene Austrittsöffnung 6a freigegeben wird. Eine Dichtigkeit wird dabei über eine Dichtung 10 gewährleistet, welche an der Kammerwand 9 anliegend auf dem Ende des Schwenkflügels 8 angeordnet ist.

Über die Austrittsöffnung 6a gelangt das die erste Antriebskammer 7a durchströmende Fluid 16 über die Eintrittsöffnung 5b der zweiten, sich an die erste Antriebskammer 7a anschließende Antriebskammer 7b in Kontakt mit deren Schwenkflügel 8. Analog zur Bewegung des Schwenkflügels 8 in der ersten Antriebskammer 7a erfolgt nun auch in der zweiten Antriebskammer 7b eine Verlagerung des Schwenkhebels 8 aus seiner Ausgangslage bis in die Endlage, in der dann wiederum die Austrittsöffnung 6b für das in die Antriebskammer 7b eingeströmte Fluid freigegeben wird, so dass dieses dann über die Eintrittsöffnung 5c in die Antriebskammer 7c und nach der Durchquerung der Antriebskammer 7c über die freigegebene Austrittsöffnung 6c über die Eintrittsöffnung 5d in die letzte Antriebskammer 7d gelangt. Nach Durchqueren der letzten Antriebskammer 7d tritt dann das die Antriebskammern 7a - 7d durchlaufende Fluid 16 aus einer Austrittsöffnung 6d aus der Aktivierungseinheit 1 aus. Die Austrittsöffnung 6d in der letzten Antriebskammer 7d gewährleistet dabei, dass die Funktionsweise nicht durch einen sich aufbauenden Gegendruck blockiert wird.

Zur Übertragung der Verschwenkbewegung der Schwenkflügel 8 auf den Rotor 4 sind die Schwenkflügel 8 mit jeweils einem Zahnrad 11 verbunden, die koaxial zum zentral verlaufenden Rotor 4 positioniert sind. Eine Verschwenkbewegung der Schwenkflügel 8 bewirkt eine Verdrehung der Zahnräder 11 um ihre jeweils parallel zur Längsachse des Rotors 4 verlaufenden Welle 19. Die Zahnräder 11 weisen neben einer Verzahnung 12 auch einen verzahnungsfreien Bereich 13, welcher in der in Fig. 6 dargestellten Ausgangslage der Zahnräder 11 dem Rotor 4 und dem auf dem Rotor 4 angeordneten Zahnrad 20 zugewandt ist, so dass der verzahnungsfreie Bereich 13 ein Freilauf des Rotors 4 gegenüber den entsprechend angeordneten Zahnrädern 11 gewährleistet.

Eine Aktivierung der Aktivierungseinheit 1 und ein sich dabei einstellendes Verschwenken des Schwenkflügels 8 bewirkt eine Verdrehung des mit dem ersten Schwenkflügel 8 verbundenen Zahnrads 11, dargestellt durch eine gestrichelte Linie in Fig. 6, wobei die Verzahnung 12 des Zahnrads 11 mit der Verzahnung 14 des Zahnrads 20 des Rotors 4 in Eingriff gelangt und somit eine Rotationsbewegung des Rotors 4 bewirkt.

In der Endlage des Schwenkhebels 8 befindet sich der verzahnungsfreie Bereich 13 erneut in dem dem Zahnrad 20 des Rotors 4 zugewandten Abschnitt, so dass dann gegenüber diesem Zahnrad 11 wieder ein Freilauf des Rotors 4 besteht. Nachfolgend erfolgt analog eine weitere Rotation des Rotors 4, hervorgerufen durch die nachfolgenden Zahnräder 11, welche mit den nachfolgenden Schwenkflügeln 8 verbunden sind, wobei die Zahnräder 11 jeweils in der Endlage sowie in der Ausgangslage der Schwenkflügel 8 mit dem Zahnrad 20 des Rotors 4 außer Eingriff befindlich sind.

Zur Lagesicherung der den nachfolgenden Antriebskammern 7b, 7c, 7d zugeordneten Zahnräder 11 sind diese über ein Sperrelement 15 in der Ausgangslage verdrehgesichert. Das Sperrelement 15 ist schwenkbar gelagert und liegt in der in Fig. 6 dargestellten Sperrlage an der eine Verzahnung 12 aufweisenden Stirnseite des Zahnrads 11 an. Mit einer gegenüberliegenden Sperrfläche liegt das Sperrelement 15 wiederum an einer Schrägfläche der Welle 19 an und verhindert somit eine Verdrehung des Zahnrads 11 bzw. Verschwenkung des Schwenkflügels 8. Erst nach einer Verdrehung des ersten Zahnrads 11 in die Endlage gelangt das Sperrelement 15 aufgrund einer Federvorspannung in Richtung auf das Zahnrad 11 mit seiner an der Stirnfläche des Zahnrads 11 anliegenden Fläche in den verzahnungsfreien Bereich, wodurch die Sperrfläche des Sperrelements 15 mit der Welle 19 außer Eingriff gelangt, sodass dann eine Verlagerung bzw. Verschwenkbewegung des Schwenkflügels 8 möglich ist.

### Bezugszeichenliste

- 1: Aktivierungseinheit
- 2: Gasgenerator
- 3: Antriebseinheit
- 4: Rotor
- 5a, 5b, 5c, 5d: Eintrittsöffnung
- 6a, 6b, 6c, 6d: Austrittsöffnung
- 7a, 7b, 7c, 7d: Arbeitskammer
- 8: Antriebskörper
- 9: Kammerwand
- 10: Dichtung
- 11: Zahnrad
- 12: Verzahnung (Zahnrad)
- 13: verzahnungsfreier Bereich
- 14: Verzahnung (Rotor)
- 15: Sperrelement
- 16: fluide Medien/ Gel
- 17: Kammer
- 18: Schwimmkolben
- 19: Welle (AK- ZR)
- 20: Zahnrad Rotor
- 21: Gasraum

## Patentansprüche

1. Aktivierungseinheit für ein Sicherungssystem eines Kraftfahrzeugs, mit
- einem pyrotechnischen Gasgenerator (2) sowie
- einer mit dem pyrotechnischen Gasgenerator (2) in Wirkverbindung befindlichen Antriebseinheit (3) zur Umwandlung des bei einer Aktivierung des Gasgenerators (2) austretenden Gasstroms in eine Rotationsbewegung eines mit dem Sicherheitssystem verbindbaren Rotors (4),
wobei
die Antriebseinheit (3) mindestens zwei in Strömungsrichtung des austretenden Gases angeordnete, eine Eintrittsöffnung (5a, 5b, 5c, 5d) und eine Austrittsöffnung (6a, 6b, 6c, 6d) für ein Fluid (16) oder Gas aufweisende Antriebskammern (7a, 7b, 7c, 7d) mit jeweils einem mit dem Rotor (4) in Wirkverbindung bringbaren Antriebskörper (8) aufweist,
**dadurch gekennzeichnet, dass**
der Antriebskörper (8) in der Ausgangslage und Endlage von dem Rotor (4) entkoppelt ist.

2. Aktivierungseinheit nach Anspruch 1, **dadurch gekennzeichnet,**
**dass** die Antriebskammern (7a, 7b, 7c, 7d) in Strömungsrichtung des austretenden Gases hintereinander liegend angeordnet sind.

3. Aktivierungseinheit nach Anspruch 1 oder 2, **dadurch gekennzeichnet,**
**dass** der Antriebskörper (8) an der Kammerwand (9) abdichtend anliegend zwischen einer Ausgangslage im Bereich der Eintrittsöffnung (5a, 5b, 5c, 5d) und einer Endlage im Bereich der Austrittsöffnung (6a, 6b, 6c, 6d) verschwenkbar gelagert ist, wobei der Antriebskörper (8) in der Endlage in einer den Zugang zur Austrittsöffnung (6a, 6b, 6c, 6d) freigebenden Position angeordnet ist.

4. Aktivierungseinheit nach einem der vorhergehenden Ansprüche, **dadurch gekennzeichnet, dass** der Antriebskörper (8) mit einem mit dem Rotor (4) in Eingriff bringbaren Zahnrad (11) verbunden ist, das derart ausgebildet und/oder angeordnet ist, dass der Rotor (4) in der Ausgangslage und Endlage des Antriebskörpers (8) mit dem Rotor (4) außer Eingriff befindlich ist.

5. Aktivierungseinheit nach einem der vorhergehenden Ansprüche, **dadurch gekennzeichnet, dass** das Zahnrad (11) einen verzahnungsfreien Bereich (13) aufweist, der derart ausgebildet ist, dass er in der Ausgangslage und Endlage den Antriebskörper (8) von einer auf dem Rotor (4) angeordneten Verzahnung (14) entkoppelt.

6. Aktivierungseinheit nach einem der vorhergehenden Ansprüche, **dadurch gekennzeichnet, dass** der Antriebskörper (8) einer einer ersten Antriebskammern (7a - 7c) nachfolgenden Antriebskammer (7b - 7d) bis zum Erreichen der Endlage des Antriebskörpers (8) der vorhergehenden Antriebskammer (7a - 7c) in der Ausgangslage verdrehgesichert ist.

7. Aktivierungseinheit nach einem der vorhergehenden Ansprüche, **dadurch gekennzeichnet, dass** die Verdrehsicherung ein zwischen einer Sperrstellung und einer Freigabestellung verlagerbares Sperrelement (15) aufweist, das derart an einer Stirnfläche des mit dem ersten Antriebskörper (8) verbundenen Zahnrads (11) anliegt, dass sich das Sperrelement (15) bei einer Anlage im Verzahnungsbereich (12) des Zahnrads (11) in der den Antriebskörper (8) der nachfolgenden Antriebskammer (7b - 7d) blockierenden und bei einer Anlage im verzahnungsfreien Bereich (13) des Zahnrads (11) in der den nachfolgenden Antriebskörper (8) freigebenden Position befindet.

8. Aktivierungseinheit nach einem der vorhergehenden Ansprüche, **dadurch gekennzeichnet, dass** das Sperrelement (15) in Richtung auf die Freigabestellung vorgespannt ist.

9. Aktivierungseinheit nach einem der vorhergehenden Ansprüche, **dadurch gekennzeichnet, dass** mindestens drei, bevorzugt vier Antriebskammern (7a, 7b, 7c, 7d) in Strömungsrichtung hintereinander liegend koaxial zum Rotor (4) angeordnet sind.

10. Aktivierungseinheit nach einem der vorhergehenden Ansprüche, **gekennzeichnet durch** ein derart in Strömungsrichtung zwischen dem pyrotechnischen Gasgenerator (2) und den Antriebskammern (7a, 7b, 7c, 7d) angeordnetes fluides Medium (16), dass das fluide Medium (16) **durch** den austretenden Gasstrom in die Antriebskammern (7a, 7b, 7c, 7d) befördert wird.

11. Aktivierungseinheit nach einem der vorhergehenden Ansprüche, **dadurch gekennzeichnet, dass** das fluide Medium, bevorzugt ein Gel (16), in einer koaxial zum Gasgenerator (2) angeordneten Kammer (17) angeordnet ist.

12. Aktivierungseinheit nach einem der vorhergehenden Ansprüche, **dadurch gekennzeichnet, dass** das fluide Medium (16) über einen Schwimmkolben (18) gegenüber dem austretenden Gas abgedichtet ist.

13. Aktivierungseinheit nach einem der vorhergehenden Ansprüche, **dadurch gekennzeichnet, dass** das fluide Medium (16) in einer unter Druckbelastung aufreißenden, an die Form der Kammer (17) angepassten flexiblen Hülle angeordnet ist.

## Claims

1. Activating unit for a safety system of a motor vehicle, having:
- a pyrotechnic gas generator (2) and also
- a drive unit (3), which is in operative connection with said pyrotechnic gas generator (2), for converting the flow of gas, that passes out when the gas generator (2) is activated, into a rotational movement of a rotor (4) which can be connected to the safety system,
wherein
the drive unit (3) has at least two drive chambers (7a, 7b, 7c, 7d) which are arranged in the direction of flow of the gas that passes out, which have an inlet aperture (5a, 5b, 5c, 5d) and an outlet aperture (6a, 6b, 6c, 6d) for a fluid (16) or gas, and which each have a drive body (8) which can be brought into operative connection with the rotor (4), **characterised in that**
the drive body (8) is uncoupled from the rotor (4) in the starting position and end position.

2. Activating unit according to Claim 1, **characterised in that** the drive chambers (7a, 7b, 7c, 7d) are arranged in a manner lying one behind another in the direction of flow of the gas that passes out.

3. Activating unit according to Claim 1 or 2, **characterised in that** the drive body (8) is mounted so as to be swivellable, in a manner resting against the chamber wall (9) in a sealing manner, between a starting position in the region of the inlet aperture (5a, 5b, 5c, 5d) and an end position in the region of the outlet aperture (6a, 6b, 6c, 6d), said drive body (8) being arranged, when in the end position, in a position that unblocks the access to the outlet aperture (6a, 6b, 6c, 6d).

4. Activating unit according to one of the preceding claims, **characterised in that** the drive body (8) is connected to a gear wheel (11) which can be brought into engagement with the rotor (4) and which is designed and/or arranged in such a way that, in the starting position and end position of the drive body (8), the rotor (4) is out of engagement with the rotor (4).

5. Activating unit according to one of the preceding claims, **characterised in that** the gear wheel (11) has a region (13) which is devoid of toothing and which is designed in such a way that, in the starting position and end position, it uncouples the drive body (8) from toothing (14) arranged on the rotor (4).

6. Activating unit according to one of the preceding claims, **characterised in that** the drive body (8) of a drive chamber (7b - 7d) that follows a first drive chamber (7a - 7c) is twist-proofed in the starting position until the end position of the drive body (8) of the preceding drive chamber (7a - 7c) is reached.

7. Activating unit according to one of the preceding claims, **characterised in that** the twist-proofing arrangement has a blocking element (15) which can be displaced between a blocking position and an unblocking position and which rests, in such a way, against an end face of the gear wheel (11) connected to the first drive body (8), that said blocking element (15) is located, when resting in the toothed region (12) of the gear wheel (11), in the position that obstructs the drive body (8) of the following drive chamber (7b - 7d) and, when resting **in that** region (13) of the gear wheel (11) which is devoid of toothing, in the position that unblocks the following drive body (8).

8. Activating unit according to one of the preceding claims, **characterised in that** the blocking element (15) is pretensioned towards the unblocking position.

9. Activating unit according to one of the preceding claims, **characterised in that** at least three, and preferably four, drive chambers (7a, 7b, 7c, 7d) are arranged, coaxially with the rotor (4), in a manner lying one behind another in the direction of flow.

10. Activating unit according to one of the preceding claims, **characterised by** a fluid medium (16) which is arranged, in the direction of flow, between the pyrotechnic gas generator (2) and the drive chambers (7a, 7b, 7c, 7d) in such a way that said fluid medium (16) is conveyed into said drive chambers (7a, 7b, 7c, 7d) by the flow of gas that passes out.

11. Activating unit according to one of the preceding claims, **characterised in that** the fluid medium, preferably a gel (16), is arranged in a chamber (17) which is arranged coaxially with the gas generator (2).

12. Activating unit according to one of the preceding claims, **characterised in that** the fluid medium (16) is sealed off, via a floating piston (18), from the gas that passes out.

13. Activating unit according to one of the preceding claims, **characterised in that** the fluid medium (16) is arranged in a flexible envelope which tears open under compressive load and is adapted to the shape of the chamber (17).

## Revendications

1. Unité d'activation pour un système de sécurisation d'un véhicule automobile, avec
- un générateur de gaz pyrotechnique (2), ainsi
- qu'une unité d'entraînement (3) en liaison active avec le générateur de gaz pyrotechnique (2) pour convertir un flux gazeux sortant lors d'une activation du générateur de gaz (2) en un mouvement de rotation d'un rotor (4) pouvant être relié au système de sécurisation,
où
l'unité d'entraînement (3) comprend au moins deux chambres d'entraînement (7a, 7b, 7c, 7d) dans la direction d'écoulement du gaz sortant, présentant une ouverture d'admission (5a, 5b, 5c, 5d) et une ouverture d'évacuation (6a, 6b, 6c, 6d) pour un fluide (16) ou un gaz, avec chacune un corps d'entraînement (8) pouvant être mis en liaison active avec le rotor (4),
**caractérisée en ce que**
le corps d'entraînement (8) est découplé du rotor (4) en position initiale et en position finale.

2. Unité d'activation selon la revendication 1, **caractérisée en ce que** les chambres d'entraînement (7a, 7b, 7c, 7d) sont disposées l'une derrière l'autre dans la direction d'écoulement du gaz sortant.

3. Unité d'activation selon la revendication 1 ou la revendication 2, **caractérisée en ce que** le corps d'entraînement (8) appliqué de manière étanche contre la paroi (9) de chambre est monté de manière pivotante entre une position initiale au niveau de l'ouverture d'admission (5a, 5b, 5c, 5d) et une position finale au niveau de l'ouverture d'évacuation (6a, 6b, 6c, 6d), ledit corps d'entraînement (8) étant en position finale positionné de manière à libérer l'accès à l'ouverture d'évacuation (6a, 6b, 6c, 6d).

4. Unité d'activation selon l'une des revendications précédentes, **caractérisée en ce que** le corps d'entraînement (8) est raccordé à une roue dentée (11) engrenable avec le rotor (4), laquelle est formée et/ou est disposée de telle manière que le rotor (4) se trouve désengrené en position initiale et en position finale du corps d'entraînement (8) avec le rotor (4).

5. Unité d'activation selon l'une des revendications précédentes, **caractérisée en ce que** la roue dentée (11) comporte une zone exempte de denture (13), laquelle est formée de manière à être désaccouplée d'une denture (14) disposée sur le rotor (4) en position initiale et en position finale du corps d'entraînement (8).

6. Unité d'activation selon l'une des revendications précédentes, **caractérisée en ce que** le corps d'entraînement (8) d'une chambre d'entraînement (7b - 7d) suivant une première chambre d'entraînement (7a - 7c) est bloqué en rotation en position initiale jusqu'à ce que soit atteinte la position finale du corps d'entraînement (8) de la chambre d'entraînement (7a - 7c) précédente.

7. Unité d'activation selon l'une des revendications précédentes, **caractérisée en ce que** la sécurité de blocage en rotation présente un élément de blocage (15) déplaçable entre une position de blocage et une position de déblocage, lequel est appliqué contre une surface frontale de la roue dentée (11) raccordée au premier corps d'entraînement (8) de telle manière que ledit élément de blocage (15) se trouve en position de blocage du corps d'entraînement (8) de la chambre d'entraînement suivante (7b - 7d) lors d'une application dans la zone dentée (12) de la roue dentée (11), et en position de déblocage du corps d'entraînement suivant (8) lors d'une application dans la zone exempte de denture (13) de la roue dentée (11).

8. Unité d'activation selon l'une des revendications précédentes, **caractérisée en ce que** l'élément de blocage (15) est pré-contraint dans la direction de la position de déblocage.

9. Unité d'activation selon l'une des revendications précédentes, **caractérisée en ce qu'**au moins trois, préférentiellement quatre chambres d'entraînement (7a, 7b, 7c, 7d) sont disposées l'une derrière l'autre dans le sens d'écoulement, coaxialement au rotor (4).

10. Unité d'activation selon l'une des revendications précédentes, **caractérisée par** un milieu fluide (16) présenté entre le générateur de gaz pyrotechnique (2) et les chambres d'entraînement (7a, 7b, 7c, 7d) dans le sens d'écoulement, de telle manière que ledit milieu fluide (16) soit refoulé vers les chambres d'entraînement (7a, 7b, 7c, 7d) par le flux de gaz sortant.

11. Unité d'activation selon l'une des revendications précédentes, **caractérisée en ce que** le milieu fluide, préférentiellement un gel (16), est présenté dans une chambre (17) disposée coaxialement au générateur de gaz (2).

12. Unité d'activation selon l'une des revendications précédentes, **caractérisée en ce que** l'étanchéité entre le milieu fluide (16) et le gaz sortant est réalisée par un piston flottant (18).

13. Unité d'activation selon l'une des revendications précédentes, **caractérisée en ce que** le milieu fluide (16) est disposé dans une gaine flexible ajustée à la forme de la chambre (17) et se déchirant sous contrainte de pression.
